# EUROPEAN PATENT SPECIFICATION

(11) **EP 1 956 751 B1**
(45) Date of publication and mention of the grant of the patent: **06.03.2013**
(21) Application number: 08001960.7
(22) Date of filing: 01.02.2008
(51) Int. Cl.: H04L 12/24, G06F 3/12

(54) **Information processing device, method and computer readable medium for printer connection setting**
Informationsverarbeitungsvorrichtung sowie Verfahren und computerlesbares Medium zur Einrichtung der Druckerverbindung
Dispositif de traitement d'informations, procédé et support lisible sur ordinateur pour réglage de connexion d'imprimante

(30) Priority: 09.02.2007 JP 2007030245
(43) Date of publication of application: 13.08.2008
(73) Proprietor: Brother Kogyo Kabushiki Kaisha, Nagoya, Aichi 467-8561 (JP)
(72) Inventor: Yamada, Kazutaka, Nagoya Aichi 467-8562 (JP)
(74) Representative: Kuhnen & Wacker

(56) References cited:
- WO-A-2004/098126
- US-A1- 2005 134 904
- US-A1- 2005 280 858
- US-B1- 7 016 060

## Description

### Background

### Technical Field

Aspects of the present invention relate to an information processing device on which a printer connection setting program is implemented.

### Related Art

In general, an information processing device has a printer connection setting function for setting a normally used printer. For example, Japanese Patent Provisional Publication No. 2006-243907A discloses an information processing device. The information processing device disclosed in this publication has a function of evaluating the quality of wireless communication between the information processing device and printers and adding a printer having the most excellent quality of wireless communication to options (i.e., initial settings) from which a normally used printer is selected.

The information processing device is able to set a printer having the most excellent quality of wireless communication as the options of the normally used printer even if an installation position of the information processing device is changed. In other words, the information processing device is able to select a printer closest to the information processing device as a normally used printer. Such a configuration eliminates the needs for manually operates the information processing device to set a normally used printer each time the installation position of the information processing device is changed.

However, the above mentioned advantages regarding the setting of a normally used printer are achieved only by evaluating the quality of wireless communication function.

An information processing device according to the preamble of claim 1 is known from WO 2004/098126 A1 and US 7,016,060 B1, respectively.

From US 2005/0280858 A1 it is known a method wherein a printer selected by the user can be automatically set as the default printer.

### Summary

Aspects of the present invention are advantageous in that an information processing device capable of changing printer connection setting to a proper state with respect to change of various types of installation environments is provided.

According to an aspect of the invention, there is provided an information processing device, comprising: an information obtaining unit configured to obtain at least one of network connection information, position information concerning a position of the information processing device and time information; and a setting unit configured to make settings such that a printer associated with information obtained by the information obtaining unit is set as a normally used printer.

With this configuration, the information processing device is able to change the printer connection setting to a proper state even if the installation environment of the information processing device is changed. Therefore, the user is not required to operate the information processing device to change the printer connection setting in accordance with the installation environment. That is, the information processing device is able to ease making of a system configuration.

In at least one aspect, the information processing device further comprises a data storage unit configured to store rule data in which a plurality of printers are related to respective data items concerning at least one of the network information, the position information and the time information. In this case, the setting unit is configured to consult the rule data to obtain a target printer related to one of the plurality of data items matching the information obtained by the information obtaining unit, and to set the target printer as the normally used printer.

In at least one aspect, the information processing device further comprises a network interface unit configured to interface the information processing device with a network. In this case, the network connection information is one of identification information of the network interface unit and identification information of an external device communicatably connected to the information processing device via the network.

In at least one aspect, the position information is GPS information.

In at least one aspect, the information processing device further comprises a GPS receiver which provides the GPS information by receiving GPS signals.

In at least one aspect, the time information is a current date and time.

In at least one aspect, the information processing device further comprises an internal timer which provided the current date and time.

According to the above mentioned aspects, it is possible to make settings simply and accurately.

In at least one aspect, the information processing device further comprises a checking unit configured to detect access to a printer driver corresponding to the printer registered in the information processing device. In this case, the setting unit starts to make settings in response to detection of the access to the printer driver by the checking unit.

Such a configuration makes it possible to prevent the setting operation from being wastefully executed.

In at least one aspect, the setting unit comprises: a notification unit configured to notify execution of a setting operation for the normally used printer to a user; and an input unit which accepts a user input regarding whether to approve the execution of the setting operation. In this case, the setting unit executes the setting operation if the execution of the setting operation is approved by the user through the input unit.

Since the setting operation is executed after approval of the user is obtained, the information processing device is able to appropriately meet the user's intention.

In at least one aspect, the information processing device further comprises a registering unit configured to allow a user to register a relationship between information concerning at least one of the network information, the position information and the time information and a corresponding printer. In this case, the setting unit consults the registered relationship to make settings for the normally used printer.

With this configuration, it is possible to meet the various types of needs of the user.

In at least one aspect, the information processing device further comprises a detection unit configured to detect current information concerning the at least one of the network information, the position information and the time information. In this case, the current information detected by the detection unit is registered as an option concerning the relationship registered by the registering unit.

With this configuration, it is possible to change the printer connection setting while meeting with flexibility the change of the installation environment of the information processing device.

According to another aspect of the invention, there is provided a method for making printer settings, comprising the steps of: obtaining at least one of network connection information, position information concerning a position of the information processing device and time information; and making settings such that a printer associated with information obtained by the information obtaining unit is set as a normally used printer.

With this configuration, the information processing device on which the method is implemented is able to change the printer connection setting to a proper state even if the installation environment of the information processing device is changed. Therefore, the user is not required to operate the information processing device to change the printer connection setting in accordance with the installation environment. That is, the information processing device is able to ease making of a system configuration.

In at least one aspect, the method further comprising the step of detecting access to a printer driver corresponding to the printer registered in the information processing device. In this case, the step of making settings is executed in response to detection of the access to the printer driver by the step of detecting.

Such a configuration makes it possible to prevent the setting operation from being wastefully executed.

In at least one aspect, the method further comprises the steps of: notifying execution of a setting operation for the normally used printer to a user; and accepting a user input regarding whether to approve the execution of the setting operation. In this case, the setting operation by the step of making setting is executed if the execution of the setting operation is approved by the user input.

Since the setting operation is executed after approval of the user is obtained, the information processing device is able to appropriately meet the user's intention.

In at least one aspect, the method further comprises the step of allowing a user to register a relationship between information concerning at least one of the network information, the position information and the time information and a corresponding printer. In this case, the step of making settings comprises the step of consulting the registered relationship to make settings for the normally used printer.

With this configuration, it is possible to meet the various types of needs of the user.

According to another aspect of the invention, there is provided a computer readable medium having computer readable instructions stored thereon, which, when executed by a computer functioning as an information processing device, are configured to execute the steps of the above mentioned method.

It is noted that various connections are set forth between elements in the following description. It is noted that these connections in general and unless specified otherwise, may be direct or indirect and that this specification is not intended to be limiting in this respect. Aspects of the invention may be implemented in computer software as programs storable on computer-readable media including but not limited to RAMs, ROMs, flash memory, EEPROMs, CD-media, DVD-media, temporary storage, hard disk drives, floppy drives, permanent storage, and the like.

### Brief Description of the Accompanying Drawings

Fig. 1 illustrates a block diagram of a control system of a notebook type personal computer according to an embodiment.
Fig. 2 is an explanatory illustration for explaining a first example of an installation environment of the personal computer.
Fig. 3 is an explanatory illustration for explaining a second example of an installation environment of the personal computer.
Fig. 4 is an explanatory illustration for explaining a third example of an installation environment of the personal computer.
Fig. 5 is an explanatory illustration for explaining a fifth example of an installation environment of the personal computer.
Fig. 6 illustrates a screen of an edit tool for changing a default printer change rule by network information.
Fig. 7 is an example of a dialog box concerning a change of a default printer.
Fig. 8 is a flowchart illustrating a first process of a printer connection setting program.
Fig. 9 illustrates a screen of an edit tool for changing a default printer change rule by GPS information.
Fig. 10 is another example of a dialog box concerning a change of a default printer.
Fig. 11 is a flowchart illustrating a second process of the printer connection setting program.
Fig. 12 illustrates a screen of an edit tool for changing a default printer change rule by time information.
Fig. 13 is another example of a dialog box concerning a change of a default printer.
Fig. 14 is a flowchart illustrating a third process of the printer connection setting program.

### Detailed Description

Hereafter, an embodiment according to the invention will be described with reference to the accompanying drawings.

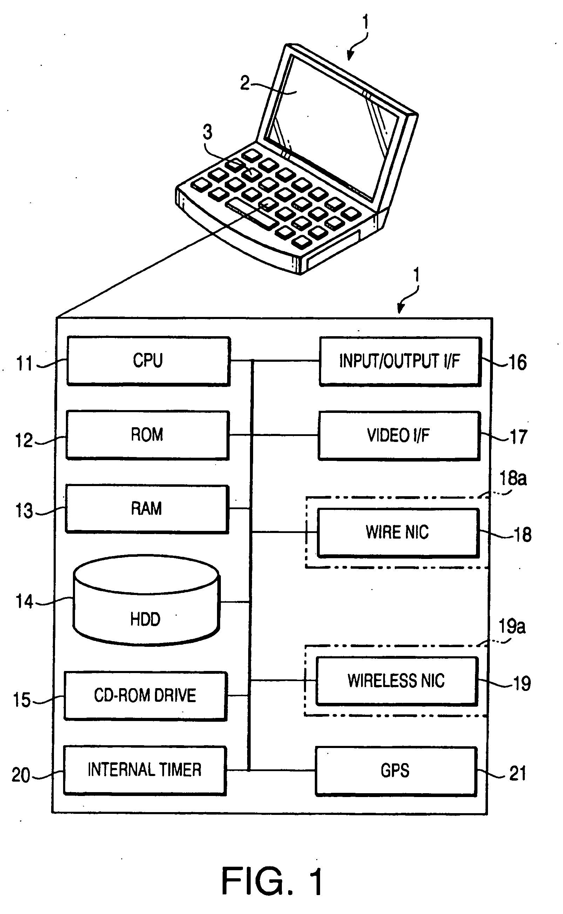

Fig. 1 illustrates a block diagram of a control system of a notebook type personal computer (hereafter, abbreviated as a PC) 1 according to an embodiment. On the PC 1, a printer connection setting program which is described in detail below is installed. A display 2 and a keyboard 3 are integrally mounted on the PC 1 so that the PC 1 formed as a potable device.

As shown in Fig. 1, the PC 1 includes a CPU 11 for executing various processes, a ROM 12 in which various programs including a BIOS executed in a start up process are stored, a RAM 13 used as a work memory for the CPU 11, an HDD 14 in which various programs including an OS (Operating System) to be executed by the CPU 11, and a CD-RON drive 15 for reading information from a CD-ROM.

Further, the PC 1 includes an I/O (Input/Output) interface 16 (e.g., an USB interface) to which an input device (e.g., a mouse) and an output device (e.g., a printer) can de attached, a video interface 17 functioning to display information on the display 2 in accordance with instructions from the CPU 11, an internal timer 20, and a GPS (Global Positioning System) receiver 21 which calculates a position of the PC 1 by receiving and processing GPS signals.

The PC 1 further includes two PC card slots 18a and 19a. Various types of PC cards can be connected to each of the PC card slots 18a and 19a. For example, a wire NIC (Network Interface Card) 18 is attached to the PC card slot 18a, and a wireless NIC (Network Interface Card) 19 is attached to the PC card slot 19a. The wire NIC 18 has a function of interfacing the PC 1 with a wired network in accordance with a predetermined wire communication protocol. The wireless NIC 19 has a function of interfacing the PC 1 with a wireless network in accordance with a predetermined wireless communication protocol.

The wire NIC 18 is assigned a unique MAC address (e.g., MAC address: 001122334455), and the wireless NIC 19 is also assigned a unique MAC address (e.g. MAC address: 00aabbccddee). Various types of printer drivers respectively supporting various types of printers used in different installation environments are installed into the PC 1 (i.e., the printer drivers are stored in the HDD 14).

A printer connection setting program according to the embodiment is installed into the PC 1. The printer connection program may be stored in advance in the HDD 14. Alternatively, the printer connection setting program may be installed into the PC 1 from a CD-ROM placed on the CD-ROM drive 15.

As described in detail below, by executing the printer connection setting program, the PC 1 executes a process for printer connection setting by using at least one of network connection information, position information and time information. Even if the installation position of the PC 1 is changed, the PC 1 is able to automatically set an appropriate printer (normally used at the installation position) as a default printer to be used. Such a configuration eliminates the need for manually changing the printer connection setting when the installation position of the PC 1 is changed (i.e., when the PC 1 is moved from a place to another place). Therefore, even if the installation position of the PC 1 is changed, the user is able to print out documents from an appropriate printer.

Since the printer connection setting program has three functions of f1) executing the printer connection setting based on the network setting information, f2) executing the printer connection setting based on the GPS position information, and f3) executing the printer connection setting based on the time information, the printer connection setting program is explained below with respect to the three functions fl-f3.

First, the function f1 for executing the printer connection setting based on the network connection information is explained. By way of example, it is assumed that the PC 1 is used at four different places (case 1 - case 4).

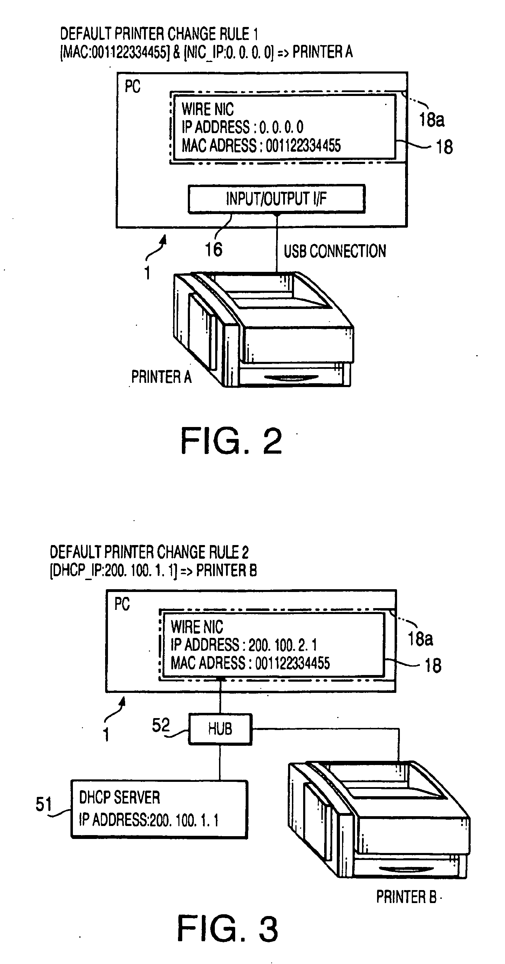

In the case 1, the installation position of the PC 1 is a user' home as shown in Fig. 2. In the user's home, the PC 1 is not connected to a network, and therefore no IP address is assigned to the wire NIC 18 connected to the PC card slot 18a (i.e., IP address: 0. 0. 0. 0). In the installation position of the case 1, a printer A is also installed. The printer A is connected to the PC 1 via the I/O interface 16 (i.e., a USB interface). Therefore, the PC 1 is able to transmit image data to the printer A.

In the case 2, the installation position of the PC 1 is the user's desk in an office as shown in Fig. 3. The PC 1 is connected to a DHCP server 51 (e.g., DHCP IP address: 200.100.1 1) via the wire NIC 18 and a hub 52. Therefore, an IP address (e.g., IP address: 200.100. 2. 1) is assigned o the wire NIC 18 by the DHCP server 51. In the installation position of the case 2, a printer B is installed. Since the printer B is connected to the PC 1 via the hub 52, the PC 1 is able to transmit image data to the printer B. It should be noted that when the PC 1 is used in a meeting room while being connected to another DHCP server, a different IP address may be assigned to the wire NIC 18.

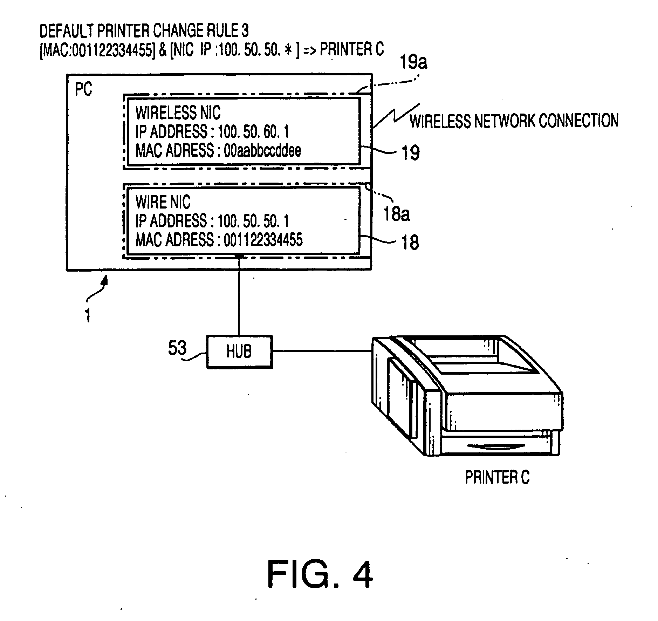

In the installation position of the case 4, the PC 1 is connected to a wireless network as shown in Fig. 4. More specifically, the PC 1 is connected to the wireless network via the wireless NIC 19 attached to the PC card slot 19a. In this installation environment, an IP address (e.g., IP address: 100. 50. 60. 1) is assigned to the wireless NIC 19 by a device (not show) of the wireless network.

The PC 1 is also connected to a HUB 3 via the wire NIC 18 attached to the PC card slot 18a. Therefore, an IP address (e.g., IP address: 100. 50. 50. 1) is assigned to the wire NIC 18 by a DHCP server (not shown). In the installation position of the case 3, a printer C is installed. Since the printer C is connected to the hub 53, the PC is able to transmit image data to the printer 3.

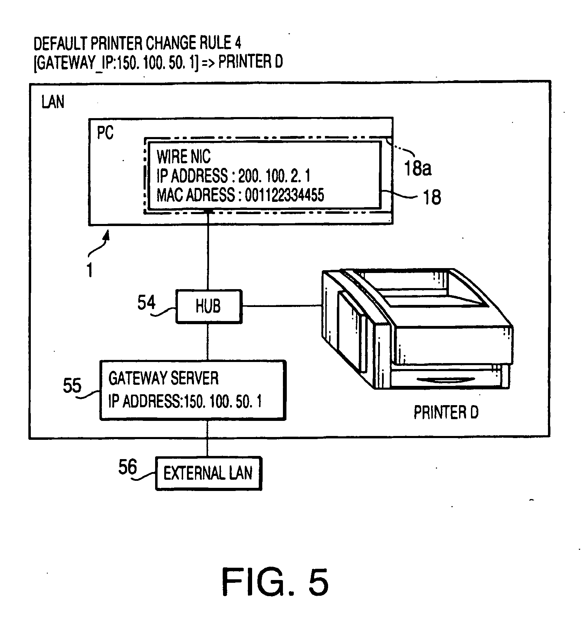

In the installation position of the case 5, the PC 1 connected to an external LAN 56 via a gateway server 55 as shown in Fig. 5. More specifically, the wire NIC 18 attached to the PC card slot 18a of the PC 1 is connected to a hub 54, and the hub 54 is connected to the gateway server 55. In this installation environment, the PC 1 is able to obtain an IP address of the gateway server 55 (e.g., GATEWAY IP address: 150. 100. 50. 1) by exchanging identification between the PC 1 and the gateway server 55.

In the installation position of the case 5, a printer D is installed. Since the printer D is connected to the hub 54, the PC 1 is able to transmit image data to the printer D.

Through the printer connection setting program, printer connection setting of the PC 1 which is used in the above mentioned installation positions of the cases 1-4 is automatically changed as explained below. For the cases 1-4, the printer connection setting program changes printer connection setting in accordance with network information.

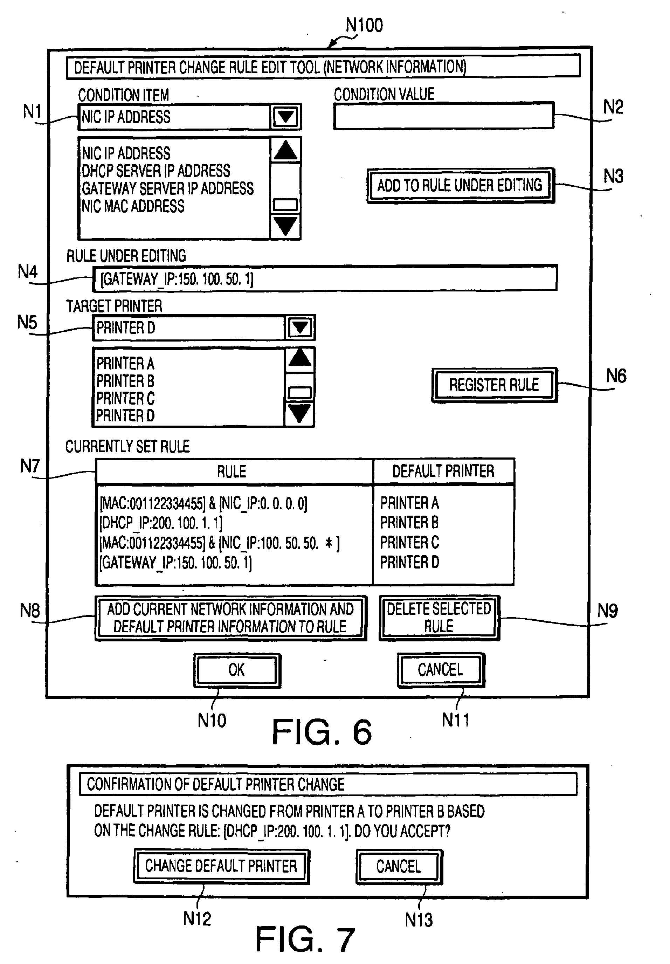

When the printer connection setting program is started, the CPU 11 displays a screen of an edit tool N100 for changing a default printer change rule by network information. The default printer means a printer to be normally used. As shown in Fig. 6, on the upper left side of the screen of the edit tool N100, a condition item field N1 is provided. Through the condition item field N1, the user is allowed to select one of condition items including an IP address of an NIC, an IP address of a DHCP, an IP address of a gateway server and a MAC address of an NIC.

On the right side of the condition item field N1, a condition value field N2 is, provided. The user is allowed to input a condition value (e.g., an IP address) regarding the condition item selected in the condition item field N 1 through use of the keyboard 3.

Under the condition value field N2, a button N3 ("ADD TO RULE UNDER EDITING") for adding a newly inputted value to a rule under editing is provided. Under the button N3, a field N4 ("RULE UNDER EDITING") of the rule under editing is provided.

In this configuration, by selecting an condition item through the condition item field N 1, inputting an address (e.g., an IP address) to the condition value field N2, and by clicking the button N3, inputted data is displayed on the field N4.

Under the field N4, a target printer field N5 is provided. The user is allowed to select a printer corresponding to the rule under editing. On the right side of the target printer field N5, a button N6 ("REGISTER RULE") for registering the inputted rule is provided. By clicking the button N6, the data displayed in the field N4 and the corresponding target printer selected through the target printer field N5 are registered in a field N7 ("CURRENTLY SET RULES") for displaying currently set rules. In the field, the rules registered by the user are displayed on the left side area, and the corresponding printers are displayed on the right side area.

Under the field N7, a button N8 for adding the current network information (i.e., the network information currently set on the PC 1) and the current default printer information to the rules is provided. By clicking the button N8, the PC 1 operates to detect the current network information and the default printer information defined on the PC 1, and to add the detected network information and the default printer information to the field N7.

On the right side of the button N8, a button N9 ("DELETE SELECTED RULE") for deleting a selected rule is provided. By selecting one of rules displayed in the field N7 and then clicking the button 19, the selected rule is deleted. At the bottom of the screen of the edit tool N100, an "OK" button N 19 and a "CANCEL" button N11 are provided so that the user is able to finally decide whether to apply the edited rule.

Regarding the case 4, if the button N8 is clicked in the installation environment of the case 4, the rule "IP address of GATEWAY SERVER: 150. 10. 50. 1 → PRINTER D" is registered to the field N7 ("CURRENTLY SET RULES"). Although in this case the IP address of the gateway server is obtained as the network information for registration,, different types of network information, such as combined information of IP addresses of an NIC and an DHCP server may be registered to the field N7 as the network information.

It is understood that the edit tool N 100 functions as a registering unit configured to allow the user to select network information and corresponding printer and to register the selected information, and the button N8 functions as a detecting unit configured to detect the current network information of the PC 1 and to add the detected network information to options registered by the registering unit. The above mentioned inputted rules 1-4 may be stored, for example, in the HDD 14 as data related to the printer connection setting program.

By thus editing the rules for changing the default printer setting, the options corresponding to the above mentioned cases 1-4 are registered in the field N7 as indicated below.
Rule 1: "MAC ADDRESS:001122334455" & "NIC IP ADDRESS: 0.0.0.0" → PRINTER A
Rule 2: "DHCP IP ADDRESS: 200.100.1.1." → PRINTER B
Rule 3: "MAC ADDRESS:001122334455" & "NIC IP ADDRESS:100. 50. 50. *" → PRINTER C ("*" means an arbitrary number.)
Rule 4: "GATEWAY IP ADDRESS: 150.100. 50.1" → PRINTER D

As can be seen from definitions of the rules 2-4, a characteristic item forming the network information concerning the installation environment may be selected and used for the definition of each rule.

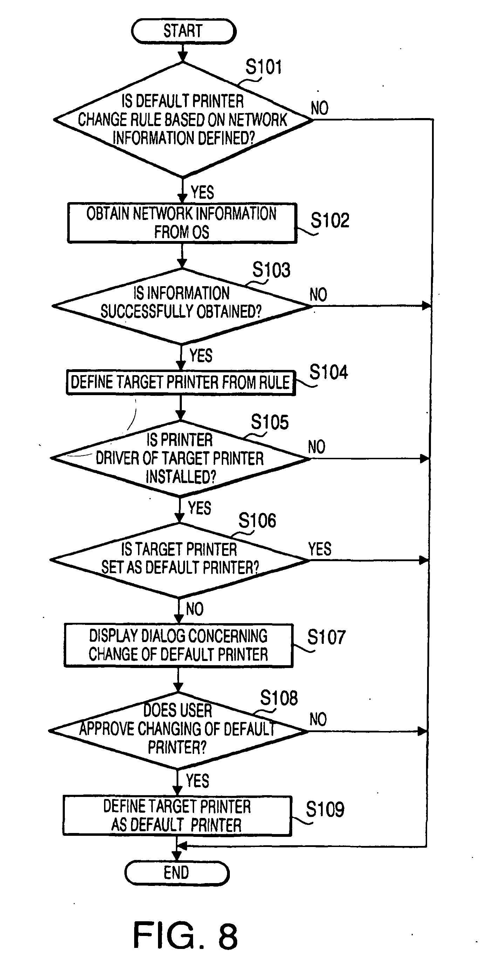

By thus registering the rules 1-4 to the printer connection setting program, the PC 1 executes a first process shown in Fig. 8. The first process may be initiated at an appropriate time so that change of the installation environment of the PC 1 is applied to the printer setting. For example, the printer connection setting program may be provided with a checking unit to check whether access to the printer driver installed in the PC 1 has occurred. That is, the checking unit is able to detect the access which occurs when a program running on the PC 1 (e.g., OS or an application) obtains information concerning a printer from the printer river to execute page setting for printing or editing or to output print information to a printer. The first process may be initiated when the checking unit detects the access to the printer driver.

When the first process is initiated, the CPU 11 checks whether the default printer change rules based on the network information is defined (step S101). In the following, it is assumed that the defined default printer change rules are the above mentioned rules 1-4. If the above mentioned rules 1-4 have been defined, the CPU 11 judges that the default printer change rules based on the network information are defined (S 101: YES). Then, control proceeds to step S 102. If the default printer change rules based on the network information is not defined (S 101: NO), the first process terminates.

In step S102, the CPU 101 obtains the current network information from the OS. Then, the CPU 11 judges whether the network information is successfully obtained (step S103). If the current network information can not be obtained (S103: NO), the first process terminates. If the current network information is successfully obtained (S103: YES), control proceeds to step S104 where the CPU 11 compares the obtained network information with the rules 1-4 to define the printer related to the rule matching the network information as a target printer to be used normally.

For example, if the network information contains "MAC address:001122334455" and "NIC IP ADDRESS:0.0.0.0", the rule 1 matches the network information. Therefore, in this case, the printer A related to the rule 1 is defined as the target printer.

Next, in step S105, the CPU 11 judges whether a printer driver for the target printer has been installed in the PC 1. If the printer driver of the target printer has been installed (S 104: YES), control proceeds to step S106. If the printer driver of the target printer has not been installed (S104: NO), the first process terminates. In step S106, the CPU 11 checks whether the target printer selected in step S104 has been defined as the default printer. If the target printer has been defined as the default printer (S106: YES), the first process terminates.

If the target printer has not been defined as the default printer (S106: NO), control proceeds to step S107 where the CPU 11 displays a dialog box concerning change of the default printer on the display 2. Fig. 7 is an example of the dialog box concerning the change of the default printer. In the example shown in Fig. 7, the dialog box indicates that the printer B corresponding to the rule 2 is defined as the default printer.

As shown in Fig. 7, the dialog box has a button N12 ("CHANGE DEFAULT PRINTER") for confirming the change of the default printer setting, and a button N 13 ("CANCEL") for canceling the change of the default printer setting: The user is allowed to determine whether to change the default printer setting by clicking one of the buttons N12 and N 13. Next, in step S108, the CPU 11 checks whether the user approves change of the default printer setting. If the user approves change of the default printer setting (i.e., if the button N12 is clicked), control proceeds to step S109. If the user does not approve change of the default printer setting (i.e., the button N12 is clicked), the first process terminates.

In step S109, the CPU 11 makes settings to define the target printer as the default printer. Then, the first process terminates.

As described above, even if the installation environment of the PC 1 is changed to one of the above mentioned cases 1-4, the PC 1 is able to automatically change the printer connection setting to an proper state in response to the current network information.

Hereafter, the function f2 for executing the printer connection setting based on the GPS position information is explained. By way of example, it is assumed that the PC 1 is used at three different places (case 5 - case 7).

In the installation position of case 5, the PC 1 is placed in an area defined by 34 degrees, 5 minutes, 30 seconds north latitude (34° 5' 30"N) and 136 degrees, 55 minutes 33-35 seconds east longitude (136° 55' 33"-35"E). In the installation position of case 5, the printer A is installed, and the PC 1 is able to transmit image data to the PC 1.

In the installation of case 6, the PC 1 is placed in an area defined by 35 degrees, 6 minutes, 46 seconds north latitude (35° 6' 46"N) and 136 degrees, 55 minutes 33 seconds east longitude (136° 55' 33"E). in the installation position of case 6, the printer B is installed, and the PC 1 is able to transmit image data to the printer B.

In the installation of case 7, the PC 1 is placed in an area defined by 36 degrees, 2 minutes, 41 seconds north latitude (36° 2' 41"N) and 136 degrees, 59 minutes 43-47 seconds east longitude (136° 59' 43"-47"E). in the installation position of case 6, the printer B is installed, and the PC 1 is able to transmit image data to the printer B.

Through the printer connection setting program, printer connection setting of the PC 1 which is used in the above mentioned installation positions of the cases 5-7 is automatically changed as explained below. For the cases 5-7, the printer connection setting program changes printer connection setting in accordance with GPS position information.

When the printer connection setting program is started, the CPU 11 displays a screen of an edit tool G 100 for changing a default printer change rule by GPS position information. On the upper left side of the screen of the edit tool G100, a check box G1 ("N") for north latitude and a check box G2 ("E") for east longitude are provided. On the right side of the checkboxes G1 and G2, a field G3 for inputting a condition value is provided. Under the field G3, a button G5 ("ADD TO RULE UNDER EDITING") for adding a newly inputted value to a rule under editing is provided. Under the button G5, a field G6 ("RULE UNDER EDITING") of the rule under editing is provided.

By selecting one of the check box G1 (north latitude) and the check box G2 (east longitude), inputting a coordinate (latitude or longitude) to the field G3, and then clicking the button G5, the inputted rule is displayed on the field G6.

On the right side of the field G3, a button G4 ("OBTAIN GPS INFORMATION") for obtaining the GPS position information is provided. By clicking the button G4, the current position of the PC 1 is obtained from the GPS receiver 21, and the obtained position is displayed in the field G6.

Under the field G6, a target printer field G7 is provided. On the right side of the target printer field G7, a button G8 ("REGISTER RULE") for registering the inputted rule is provided. Under the target printer field G7, a field G9 ("CURRENTLY SET RULES") for displaying currently set rules is provided. Since the target printer field G7, the button G8 and the field G9 have the same functions as those of the target printer field N5, the button N6 and the field N7, respectively, explanations thereof will not be repeated.

Under the field G9, a button G10 for adding the current GPS position information and the current default printer information to the rules is provided. By clicking the button G10, the PC 1 operates to detect the current GPS position information and the default printer information defined on the PC 1, and to add the detected network information and the default printer information to the field G9.

On the right side of the button G10, a button G11 ("DELETE SELECTED RULE") for deleting a selected rule is provided. Since the function of the button G11 is the same as that of the button N9, explanations of the button G11 will not be repeated. At the bottom of the screen of the edit tool G100, an "OK" button G12 and a "CANCEL" button G13 are provided so that the user is able to finally decide whether to apply the edited rule.

It is understood that the edit tool G100 functions as a registering unit configured to allow the user to select GPS position information and corresponding printer and to register the selected information, and the button G10 functions as a detecting unit configured to detect the current GPS position information of the PC 1 and to add the detected GPS position information to options registered by the registering unit. The above mentioned inputted rules may be stored, for example, in the HDD 14 as data related to the printer connection setting program.

By thus editing the rules for changing the default printer setting, the options corresponding to the above mentioned three rules (rules 5-7) are registered in the field G9 as indicated below.
Rule 5: "N:34. 5.30.* & E:13-6.55.33. *_136.55.35.*" → PRINTER A
Rule 6: "N:35. 6.46.* & E:136.55.33 *" → PRINTER B
Rule 7: "N:36. 2.41.* & E:136.59.43. *_136.59.47.*" → PRINTER C

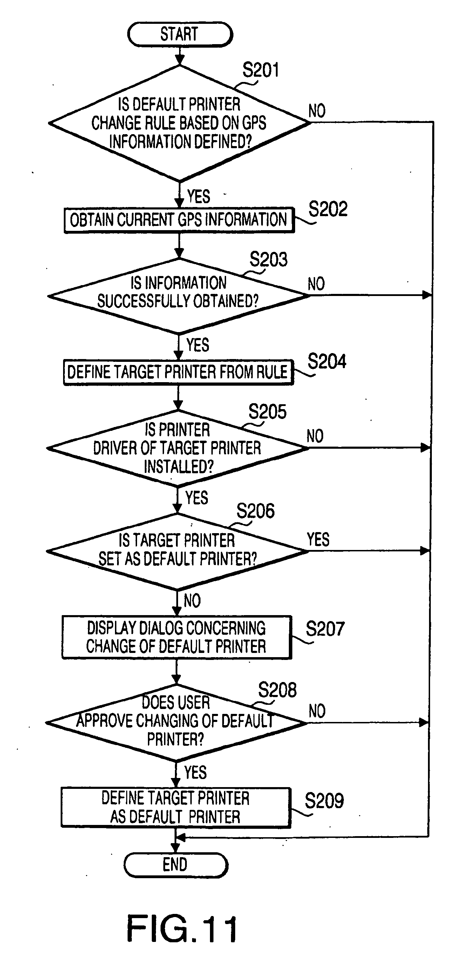

By thus registering the rules 5-7 to the printer connection setting program, the PC 1 executes a second process shown in Fig. 11. The second process may be initiated when the checking unit detects the access to the printer driver. As can be seen from Fig. 11, steps S203 to S209 are substantially the same as steps S103 to S109 of the first process. Therefore, in the following, only the features of the second process are described.

When the second process is initiated, the CPU 11 checks whether the default printer change rule based on the GPS information has been defined (step S201). In the following, it is assumed that the default printer change rule (the rules 5-7) has been defined. If the default printer change rule has not been defined (S201: NO), the second process terminates.

Since the rules 5-7 have been defined (S201: YES), control proceeds to step S202. In step S202, the CPU 11 obtains the current position information (GPS position information) from the GPS receiver 21. In step S204, the CPU 11 compares the obtained GPS position information with the rules 5-7 to define the printer corresponding to the rule matching the GPS position information as a target printer to be used normally. For example, if the obtained GPS position information is (34° 5' 30"N and 136° 55' 33"-35"E), the obtained GPS position information matches the rule 5. In this case, the printer A corresponding to the rule 5 is defined as the target printer.

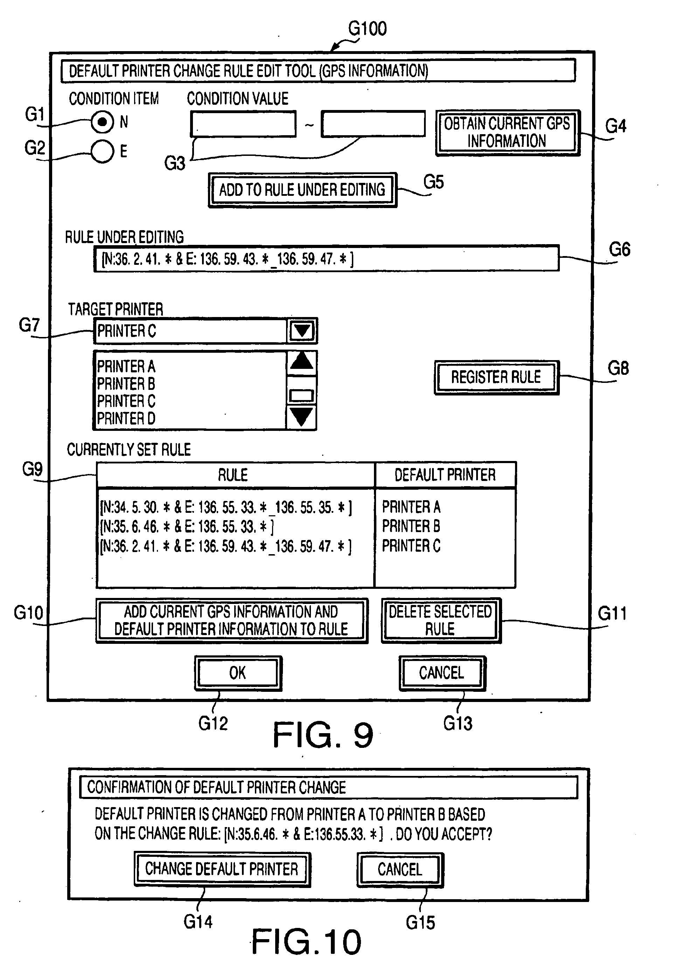

In step S207, the CPU 11 displays a dialog box concerning change of the default printer on the display 2. Fig. 10 is an example of the dialog box concerning the change of the default printer. In the example shown in Fig. 10, the dialog box indicates that the printer B corresponding to the rule 5 is defined as the default printer.

As shown in Fig. 10, the dialog box has a button G14 ("CHANGE DEFAULT PRINTER") for confirming the change of the default printer setting, and a button G15 ("CANCEL") for canceling the change of the default printer setting. The user is allowed to determine whether to change the default printer setting by clicking one of the buttons G14 and G15. Next, in step S208, the CPU 11 checks whether the user approves change of the default printer setting. If the user approves change of the default printer setting (i.e., if the button G 14 is clicked), control proceeds to step S209. If the user does not approve change of the default printer setting (i.e., the button G15 is clicked), the second process terminates.

In step S209, the CPU 11 makes settings to define the target printer as the default printer. Then, the second process terminates.

As described above, even if the installation environment of the PC 1 is changed to one of the above mentioned cases 5-7, the PC 1 is able to automatically change the printer connection setting to an proper state in accordance with the GPS position information.

Hereafter, the function f3 for executing the printer connection setting based on the time information is explained. By way of example, it is assumed that the PC 1 is used at three different installation environments (case 8 - case 10).

In the installation environment of case 8, the PC 1 placed in the user's home, and is connected to the printer A in the time zone of 20:00 - 7:00.

In the installation environment of case 9, the PC 1 is placed in the user's office, and is connected to the printer B in the time zone of 9:00-20:00 (office hours) on Monday to Friday through January 3rd to December 28th.

In the installation environment of case 10, the PC 1 placed at a particular place when the user uses the PC on Saturday, and is connected to the printer C in the time zone of 9:00-1700 on Saturday.

Through the printer connection setting program, printer connection setting of the PC 1 which is used in the above mentioned installation environments of the cases 8-10 is automatically changed as explained below. For the cases 8-10, the printer connection setting program changes printer connection setting in accordance with time information.

When the printer connection setting program is started, the CPU 11 displays a screen of an edit tool T100 for changing a default printer change rule by time information. On the upper left side of the screen of the edit tool T100, a field T1 ("CONDITION ITEM") for inputting a condition item is provided. On the right side of the field T1, a field T2 ("CONDITION VALUE") for inputting a condition value is provided. Under the field T2, a button T3 ("ADD TO RULE UNDER EDITING") for adding a newly inputted value to a rule under editing is provided. Under the button T3, a field T4 ("RULE UNDER EDITING") of the rule under editing is provided. By selecting one of a day of the week, a time and a date on the field T1, inputting a vale to the field T2, and then clicking the button T3, the inputted data is displayed on the field T4.

Under the field T4, a target printer field T5 is provided. On the right side of the target printer field T5, a button T6 ("REGISTER RULE") for registering the inputted rule is provided. Under the target printer field T5, a field T7 ("CURRENTLY SET RULES") for displaying currently set rules is provided. Since the target printer field T5, the button T6 and the field T7 have the same functions as those of the target printer field N5, the button N6 and the field N7, respectively, explanations thereof will not be repeated.

Under the field T7, a button T8 ("DELETE SELECTED RULE") for deleting a selected rule is provided. Since the function of the button T8 is the same as that of the button N9, explanations of the button T8 will not be repeated. At the bottom of the screen of the edit tool T100, an "OK" button T9 and a "CANCEL" button T10 are provided so that the user is able to finally decide whether to apply the edited rule.

It is understood that the edit tool T100 functions as a registering unit configured to allow the user to select time information and corresponding printer and to register the selected information.

By thus editing the rules for changing the default printer setting, the options corresponding to the above mentioned three rules (rules 8-10) are registered in the field T7 as indicated below.
Rule 8: "TIME 20:00-7:00" → PRINTER A
Rule 9: "TIME 9:00-20:00" & "MONDAY TO FRIDAY" & "JANUARY 1ST TO DECEMBER 28TH" → PRINTER B
Rule 10: "TIME 9:00-20:00" & "SATURDAY" → PRINTER C

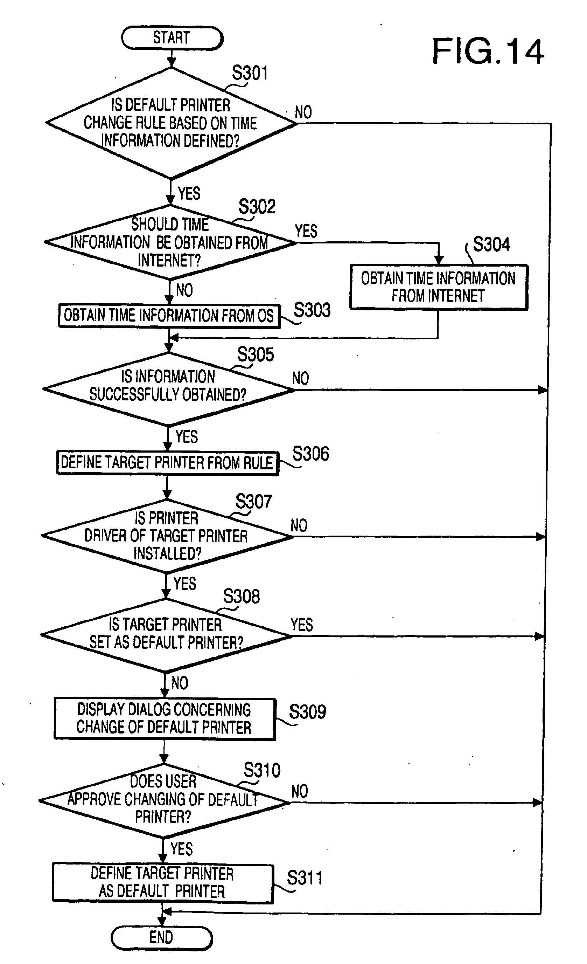

By thus registering the rules 8-10 to the printer connection setting program, the PC 1 executes a third process shown in Fig. 14. The third process may be initiated when the checking unit detects the access to the printer driver. As can be seen from Fig. 14, steps S305 to S311 are substantially the same as steps S103 to S109 of the first process. Therefore, in the following, only the features of the third process are described.

When the third process is started, the CPU 11 checks whether the default printer change rule based on the time information has been defined (step S301). In the following, it is assumed that the default printer change rule (the rules 8-10) has been defined. If the default printer change rule has not been defined (S301: NO), the third process terminates.

Since the rules 8-10 have been defined (S301: YES), control proceeds to step S302. In step S302, the CPU 11 judges whether to obtain time information from the Internet. If the time information should be obtained from the Internet, the CPU 11 obtains the time information from the Internet (step S304). If the time information should not be obtained from the Internet (S302: NO), the CPU 11 obtains the time information from the OS (i.e., the internal timer 20).

In step S306, the CPU 11 compares the obtained time information with the rules 8-10 to define the printer corresponding to the rule matching the time information as a target printer to be used normally. For example, if the obtained time information is (time 20:00-7:00), the obtained time information matches the rule 8. In this case, the printer A corresponding to the rule 8 is defined as the target printer.

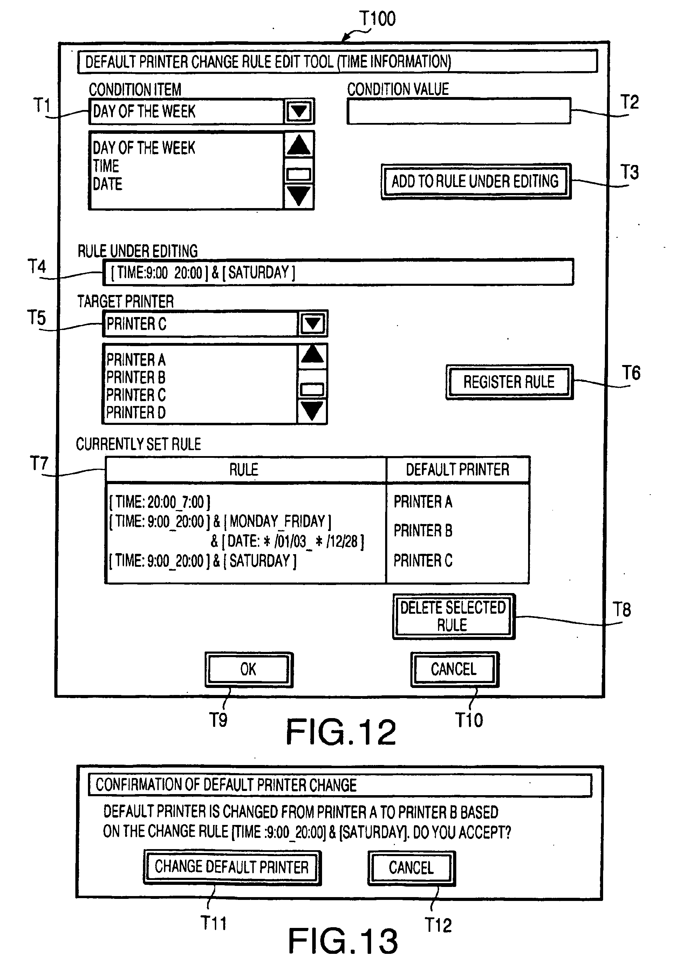

In step S309, the CPU 11 displays a dialog box concerning change of the default printer on the display 2. Fig. 13 is an example of the dialog box concerning the change of the default printer. In the example shown in Fig. 13, the dialog box indicates that the printer C corresponding to the rule 10 is defined as the default printer.

As shown in Fig. 13, the dialog box has a button T11 ("CHANGE DEFAULT PRINTER") for confirming the change of the default printer setting, and a button T12 ("CANCEL") for canceling the change of the default printer setting. The user is allowed to determine whether to change the default printer setting by clicking one of the buttons T11 and T12. Next, in step S310, the CPU 11 checks whether the user approves change of the default printer setting. If the user approves change of the default printer setting (i.e., if the button T11 is clicked), control proceeds to step S311. If the user does not approve change of the default printer setting (i.e., the button G15 is clicked), the third process terminates.

In step S311, the CPU 11 makes settings to define the target printer as the default printer. Then, the third process terminates.

As described above, even if the installation environment of the PC 1 is changed to one of the above mentioned cases 8-10, the PC 1 is able to automatically change the printer connection setting to an proper state in accordance with the time information.

As described above, according to the printer connection setting program, the PC 1 is able to change the printer connection setting to a proper state even if the installation environment of the PC 1 is changed. Therefore, the user is not required to operate the PC 1 to change the printer connection setting in accordance with the installation environment of the PC 1. That is, the printer connection setting program is able to ease making of a system configuration.

In the above mentioned operation of the printer connection setting program, the network information is identification information of network interface units in the PC 1 or identification information of an external device with which the PC is able to communicate via a network, the position information is the GPS information, the time information is current date and time. Such a configuration enables the printer connection setting program to perform the setting process precisely and easily.

Since the checking unit defines the appropriate timing when the printer connection setting program is started, it is possible to prevent the printer connection setting program from being wastefully executed.

Since the printer connection setting program applies the change of the default printer after obtaining approval of the user through the dialog box and the OK button (i.e., a notification unit and input unit), it is possible to decide whether to change the default printer setting in accordance with the use's intention.

According to the above mentioned edit tool functioning as a registering unit, the printer connection setting program is able to satisfy the user's needs concerning the relationship between the installation environment and the corresponding printer.

The detection unit which is able to detect the current installation environment enables the printer connection setting program to support the change of the installation environment with flexibility.

Although the present invention has been described in considerable detail with reference to certain preferred embodiments thereof, other embodiments are possible.

In the above mentioned embodiment, the printer connection setting program operates separately for the where the network information is used, the case where the GPS information is used and the case where the time information is used. However, it is understood that the printer connection setting program may operate to change the printer connection setting in accordance with at least two of the network information, the GPS information and the time information.

## Claims

1. An information processing device, comprising:
an information obtaining unit configured to obtain at least one of network connection information, position information concerning a position of the information processing device and time information;
a setting unit configured to make settings such that a printer associated with information obtained by the information obtaining unit is set as a default printer, and
a data storage unit (14) configured to store rule data (N7; G9; T7) in which a plurality of printers are related to respective data items (N4; G6; T4) concerning at least one of the network information, the position information and the time information,
wherein the setting unit is configured to consult the rule data (N7; G9; T7) to obtain a target printer related to one of the plurality of data items (N4; G6; T4) matching the information obtained by the information obtaining unit, and to set the target printer as the default printer.

2. The information processing device according to claim 1, further comprising a network interface unit (18a, 19a) configured to interface the information processing device (1) with a network,
wherein the network connection information is one of identification information of the network interface unit and identification information of an external device communicatably connected to the information processing device (1) via the network.

3. The information processing device according to claim 1 or 2, wherein the position information is GPS information.

4. The information processing device according to claim 3, further comprising a GPS receiver (21) which provides the GPS information by receiving GPS signals.

5. The information processing device according to any of claims 1 to 4, wherein the time information is a current date and time.

6. The information processing device according to claim 5, further comprising an internal timer which provided the current date and time.

7. The information processing device according to any of claims 1 to 6, further comprising a checking unit configured to detect access to a printer driver corresponding to the printer registered in the information processing device (1),
wherein the setting unit starts to make settings in response to detection of the access to the printer driver by the checking unit.

8. The information processing device according to any of claims 1 to 7,
wherein the setting unit comprises:
a notification unit configured to notify execution of a setting operation for the normally used printer to a user; and
an input unit which accepts a user input regarding whether to approve the execution of the setting operation,
wherein the setting unit executes the setting operation if the execution of the setting operation is approved by the user through the input unit.

9. The information processing device according to claim 1, further comprising a registering unit configured to allow a user to register a relationship between information concerning at least one of the network information, the position information and the time information and a corresponding printer,
wherein the setting unit consults the registered relationship to make settings for the default printer.

10. The information processing device according to claim 9, further comprising a detection unit configured to detect current information concerning the at least one of the network information, the position information and the time information,
wherein the current information detected by the detection unit is registered as an option concerning the relationship registered by the registering unit.

11. A method for making printer settings in a information processing device according to any one of claims 1 to 10, comprising the steps of:
obtaining, - by an information obtaining unit, at least one of network connection information, position information concerning a position of the information processing device and time information; and
making settings, - by a setting unit, such that a printer associated with information obtained by the information obtaining unit is set as a default printer; and
- storing, by a data storage unit, rule data (N7; G9; T7) in which a plurality of printers are related to respective data items (N4; G6; T4) concerning at least one of the network information, the position information and the time information, and consulting, by the setting unit, the rule data (N7; G9; T7) to obtain a target printer related to one of the plurality of data items (N4; G6; T4) matching the information obtained by the information obtaining unit, and to set the target printer as the said default printer.

12. The method according to claim 11, further comprising the step of detecting access to a printer driver corresponding to the printer registered in the information processing device,
wherein the step of making settings is executed in response to detection of the access to the printer driver by the step of detecting.

13. The method according to claim 11 or 12,
further comprising the steps of:
notifying execution of a setting operation for the default printer to a user; and
accepting a user input regarding whether to approve the execution of the setting operation,
wherein the setting operation by the step of making setting is executed if the execution of the setting operation is approved by the user input.

14. The method according to any of claims 11 to 13, further comprising the step of allowing a user to register a relationship between information concerning at least one of the network information, the position information and the time information and a corresponding printer,
wherein the step of making settings comprises the step of consulting the registered relationship to make settings for the default printer.

15. A computer readable medium having computer readable instructions stored thereon, which, when executed by a computer functioning as an information processing device, are configured to execute the steps of the method according to any of claims 11 to 14.

## Patentansprüche

1. Informationsverarbeitungsvorrichtung, die aufweist:
eine Informationsabrufeinheit, die derart konfiguriert ist, dass sie mindestens eine von einer Netzwerkverbindungsinformation, einer Positionsinformation hinsichtlich einer Position der Informationsverarbeitungsvorrichtung und einer Zeitinformation abruft;
eine Einstelleinheit, die derart konfiguriert ist, dass sie Einstellungen so vornimmt, dass ein Drucker, der mit einer von der Informationserhaltungseinheit abgerufenen Information verbunden ist, als ein Standarddrucker eingestellt wird, und
eine Datenspeichereinheit (14), die derart konfiguriert ist, dass sie Regeldaten (N7; G9; T7) speichert, bei denen eine Mehrzahl von Druckern mit jeweiligen Datenelementen (N4; G6; T4) verbunden werden, die mindestens eine von der Netzwerkinformation, der Positionsinformation und der Zeitinformation betreffen,
wobei die Einstelleinheit derart konfiguriert ist, dass sie die Regeldaten (N7; G9; T7) hinzuzieht, um einen Zieldrucker abzurufen, der mit einem von der Mehrzahl von Datenelementen (N4; G6; T4) verbunden ist, die zu der durch die Informationsabrufeinheit abgerufenen Information passen, und um den Zieldrucker als den Standarddrucker festzulegen.

2. Informationsverarbeitungsvorrichtung nach Anspruch 1, die ferner eine Netzwerkschnittstelleneinheit (18a, 19a) aufweist, die derart konfiguriert ist, dass sie die Informationsverarbeitungsvorrichtung (1) mit einem Netzwerk verbindet, wobei die Netzwerkverbindungsinformation eine von einer Identifikationsinformation der Netzwerkschnittstelleneinheit und einer Identifikationsinformation einer externen Vorrichtung ist, die kommunikativ mit der Informationsverarbeitungsvorrichtung (1) über das Netzwerk verbunden ist.

3. Informationsverarbeitungsvorrichtung nach Anspruch 1 oder 2, wobei die Positionsinformation eine GPS-Information ist.

4. Informationsverarbeitungsvorrichtung nach Anspruch 3, die ferner einen GPS-Empfänger (21) aufweist, der die GPS-Information durch Empfangen von GPS-Signalen bereitstellt.

5. Informationsverarbeitungsvorrichtung nach einem der Ansprüche 1 bis 4, wobei die Zeitinformation ein aktuelles Datum und eine aktuelle Uhrzeit ist.

6. Informationsverarbeitungsvorrichtung nach Anspruch 5, die ferner einen internen Zeitgeber aufweist, der dem aktuellen Datum und der aktuellen Zeit bereitgestellt wird.

7. Informationsverarbeitungsvorrichtung nach einem der Ansprüche 1 bis 6, die ferner eine Prüfeinheit aufweist, die derart konfiguriert ist, dass sie einen Zugriff auf einen Druckertreiber entsprechend dem Drucker, der in der Informationsverarbeitungsvorrichtung (1) registriert ist, erfasst,
wobei die Einstelleinheit beginnt, Einstellungen als Antwort auf ein Erfassen des Zugriffs auf den Druckertreiber durch die Prüfeinheit vorzunehmen.

8. Informationsverarbeitungsvorrichtung nach einem der Ansprüche 1 bis 7, wobei die Einstelleinheit aufweist:
eine Benachrichtigungseinheit, die derart konfiguriert ist, dass sie den Benutzer über ein Ausführen eines Einstellvorgangs für einen normalerweise verwendeten Drucker benachrichtigt; und
eine Eingabeeinheit, die eine Benutzereingabe in Bezug darauf, ob das Ausführen des Einstellvorgangs zu bestätigen ist, übernimmt,
wobei die Einstelleinheit den Einstellvorgang ausführt, wenn das Ausführen des Einstellvorgangs durch den Benutzer über die Eingabeeinheit bestätigt wird.

9. Informationsverarbeitungsvorrichtung nach Anspruch 1, die ferner eine Registriereinheit aufweist, die derart konfiguriert ist, dass sie es einem Benutzer ermöglicht, eine Beziehung zwischen einer Information hinsichtlich mindestens einer der Netzwerkinformation, der Positionsinformation und der Zeitinformation und einem entsprechenden Drucker zu registrieren,
wobei die Einstelleinheit die erfasste Beziehung hinzuzieht, um Einstellungen für den Standarddrucker vorzunehmen.

10. Informationsverarbeitungsvorrichtung nach Anspruch 9, die ferner eine Erfassungseinheit aufweist, die derart konfiguriert ist, dass sie eine aktuelle Information hinsichtlich der mindestens einen der Netzwerkinformation, der Positionsinformation und der Zeitinformation erfasst,
wobei die aktuelle Information, die von der Erfassungseinheit erfasst wird, als eine Möglichkeit hinsichtlich der Beziehung, die von der Registriereinheit registriert wird, registriert wird.

11. Verfahren zum Herstellen von Druckereinstellungen in einer Informationsverarbeitungsvorrichtung nach einem der Ansprüche 1 bis 10, das die Schritte aufweist:
Abrufen mindestens einer von einer Netzwerkverbindungsinformation, einer Positionsinformation hinsichtlich einer Position der Informationsverarbeitungsvorrichtung und einer Zeitinformation durch eine Informationsabrufeinheit; und
Vornehmen von Einstellungen durch eine Einstelleinheit derart, dass ein Drucker, der mit Information, die von der Erhaltungseinheit erhalten wird, in Verbindung gesetzt wird, als Standarddrucker eingestellt wird; und
Speichern von Regeldaten (N7; G9; T7) durch eine Datenspeichereinheit, bei denen eine Mehrzahl von Druckern mit jeweiligen Datenelementen verbunden ist, welche zumindest eine von der Netzwerkinformation, der Positionsinformation und der Zeitinformation betreffen, und
Hinzuziehen der Regeldaten (N7; G9; T7) durch die Einstelleinheit zum Abrufen eines Zieldruckers, der mit einem der Mehrzahl von Datenelementen verbunden ist (N4; N6; T4), welche zu der durch die Informationsabrufeinheit abgerufenen Information passt, und zum Einstellen des Zieldruckers als den Standarddrucker.

12. Verfahren nach Anspruch 11, das ferner den Schritt zum Erfassen eines Zugriffs auf einen Druckertreiber entsprechend dem Drucker, der in der Informationsverarbeitungseinrichtung registriert ist, aufweist,
wobei der Schritt des Vornehmens von Einstellungen als Antwort auf das Erfassen des Zugriffs auf den Druckertreiber durch den Schritt des Erfassens ausgeführt wird.

13. Verfahren nach Anspruch 11 oder 12, das ferner die Schritte aufweist:
Benachrichtigen eines Benutzer über ein Ausführen eines Einstellvorgangs für den Standarddrucker, und
Annehmen einer Benutzereingabe in Bezug darauf, ob das Ausführen des Einstellvorgangs bestätigt ist,
wobei der Einstellvorgang durch den Schritt des Vornehmens einer Einstellung ausgeführt wird, wenn das Ausführen des Einstellvorgangs durch die Benutzereingabe bestätigt wird.

14. Verfahren nach einem der Ansprüche 11 bis 13, das ferner den Schritt zum Berechtigen eines Benutzers aufweist, eine Beziehung zwischen einer Information hinsichtlich mindestens einer der Netzwerkinformation, der Positionsinformation und der Zeitinformation und einem entsprechenden Drucker zu registrieren,
wobei der Schritt des Vornehmens von Einstellungen den Schritt eines Hinzuziehens der registrierten Beziehung aufweist, um Einstellungen für den Standarddrucker vorzunehmen.

15. Computerlesbares Medium mit darauf gespeicherten computerlesbaren Anweisungen, die, wenn sie durch einen Computer, der als eine Informationsverarbeitungsvorrichtung fungiert, ausgeführt werden, derart konfiguriert sind, dass sie die Schritte des Verfahrens nach irgendeinem der Ansprüche 11 bis 14 ausführen.

## Revendications

1. Dispositif de traitement d'informations, comprenant :
une unité d'obtention d'informations configurée pour obtenir au moins une parmi des informations de connexion de réseau, des informations de position concernant une position du dispositif de traitement d'informations et des informations de temps ;
une unité de réglage configurée pour effectuer des réglages de sorte qu'une imprimante associée à des informations obtenues par l'unité d'obtention d'informations soit définie comme une imprimante par défaut, et
une unité de stockage de données (14) configurée pour stocker des données de règle (N7 ; G9 ; T7) dans lesquelles une pluralité d'imprimantes sont liées à des éléments de données respectifs (N4 ; G6 ; T4) concernant au moins une parmi les informations de réseau, les informations de position et les informations de temps,
dans lequel l'unité de réglage est configurée pour consulter les données de règle (N7 ; G9 ; T7) pour obtenir une imprimante cible liée à un de la pluralité d'éléments de données (N4 ; G6 ; T4) concordant avec les informations obtenues par l'unité d'obtention d'informations, et pour définir l'imprimante cible comme l'imprimante par défaut.

2. Dispositif de traitement d'informations selon la revendication 1, comprenant en outre une unité d'interface de réseau (18a, 19a) configurée pour interfacer le dispositif de traitement d'informations (1) avec un réseau,
dans lequel les informations de connexion de réseau sont une parmi des informations d'identification de l'unité d'interface de réseau et des informations d'identification d'un appareil externe connecté de façon communicable au dispositif de traitement d'informations (1) via le réseau.

3. Dispositif de traitement d'informations selon la revendication 1 ou 2, dans lequel les informations de position sont des informations GPS.

4. Dispositif de traitement d'informations selon la revendication 3, comprenant en outre un récepteur GPS (21) qui fournit les informations GPS en recevant des signaux GPS.

5. Dispositif de traitement d'informations selon l'une quelconque des revendications 1 à 4, dans lequel les informations de temps sont une date et une heure actuelles.

6. Dispositif de traitement d'informations selon la revendication 5, comprenant en outre un temporisateur interne qui fournit la date et l'heure actuelles.

7. Dispositif de traitement d'informations selon l'une quelconque des revendications 1 à 6, comprenant en outre une unité de vérification configurée pour détecter un accès à un pilote d'imprimante correspondant à l'imprimante enregistrée dans le dispositif de traitement d'informations (1),
dans lequel l'unité de réglage commence à effectuer des réglages en réponse à la détection de l'accès au pilote d'imprimante par l'unité de vérification.

8. Dispositif de traitement d'informations selon l'une quelconque des revendications 1 à 7,
dans lequel l'unité de réglage comprend :
une unité de notification configurée pour notifier l'exécution d'une opération de réglage pour l'imprimante normalement utilisée à un utilisateur ; et
une unité d'entrée qui accepte une entrée d'utilisateur concernant si approuver l'exécution de l'opération de réglage,
dans lequel l'unité de réglage exécute l'opération de réglage si l'exécution de l'opération de réglage est approuvée par l'utilisateur par l'intermédiaire de l'unité d'entrée.

9. Dispositif de traitement d'informations selon la revendication 1, comprenant en outre une unité d'enregistrement configurée pour permettre à un utilisateur d'enregistrer une relation entre des informations concernant au moins une parmi les informations de réseau, les informations de position et les informations de temps et une imprimante correspondante,
dans lequel l'unité de réglage consulte la relation enregistrée pour effectuer des réglages pour l'imprimante par défaut.

10. Dispositif de traitement d'informations selon la revendication 9, comprenant en outre une unité de détection configurée pour détecter des informations actuelles concernant la au moins une parmi les informations de réseau, les informations de position et les informations de temps,
dans lequel les informations actuelles détectées par l'unité de détection sont enregistrées comme une option concernant la relation enregistrée par l'unité d'enregistrement.

11. Procédé pour effectuer des réglages d'imprimante dans un dispositif de traitement d'informations selon l'une quelconque des revendications 1 à 10, comprenant les étapes consistant à :
obtenir, par une unité d'obtention d'informations, au moins une parmi des informations de connexion de réseau, des informations de position concernant une position du dispositif de traitement d'informations et des informations de temps ; et
effectuer des réglages, par une unité de réglage, de sorte qu'une imprimante associée à des informations obtenues par l'unité d'obtention d'informations soit définie comme une imprimante par défaut ; et
stocker, par une unité de stockage de données, des données de règle (N7 ; G9 ; T7) dans lesquelles une pluralité d'imprimantes sont liées à des éléments de données respectifs (N4 ; G6 ; T4) concernant au moins une parmi les informations de réseau, les informations de position et les informations de temps, et
consulter, par l'unité de réglage, les données de règle (N7 ; G9 ; T7) pour obtenir une imprimante cible liée à un de la pluralité d'éléments de données (N4 ; G6 ; T4) concordant avec les informations obtenues par l'unité d'obtention d'informations, et pour définir l'imprimante cible comme ladite imprimante par défaut.

12. Procédé selon la revendication 11, comprenant en outre l'étape consistant à détecter un accès à un pilote d'imprimante correspondant à l'imprimante enregistrée dans le dispositif de traitement d'informations,
dans lequel l'étape consistant à effectuer des réglages est exécutée en réponse à la détection de l'accès au pilote d'imprimante par l'étape de détection.

13. Procédé selon la revendication 11 ou 12,
comprenant en outre les étapes consistant à :
notifier l'exécution d'une opération de réglage pour l'imprimante par défaut à un utilisateur ; et
accepter une entrée d'utilisateur concernant si approuver l'exécution de l'opération de réglage,
dans lequel l'opération de réglage par l'étape consistant à effectuer des réglages est exécutée si l'exécution de l'opération de réglage est approuvée par l'entrée d'utilisateur.

14. Procédé selon l'une quelconque des revendications 11 à 13, comprenant en outre l'étape consistant à permettre à un utilisateur d'enregistrer une relation entre des informations concernant au moins une parmi les informations de réseau, les informations de position et les informations de temps et une imprimante correspondante,
dans lequel l'étape consistant à effectuer des réglages comprend l'étape consistant à consulter la relation enregistrée pour effectuer des réglages pour l'imprimante par défaut.

15. Support lisible par ordinateur ayant des instructions lisibles par ordinateur stockées sur celui-ci, qui, lorsqu'elles sont exécutées par un ordinateur fonctionnant comme un dispositif de traitement d'informations, sont configurées pour exécuter les étapes du procédé selon l'une quelconque des revendications 11 à 14.
